# EUROPEAN PATENT APPLICATION

(11) **EP 4 624 738 A1**
(43) Date of publication of application: **01.10.2025**
(21) Application number: 25160060.7
(22) Date of filing: 25.02.2025
(51) Int. Cl.: F02D 19/06, F02D 41/00, F02D 19/08, F02D 41/14

(54) **ENGINE DEVICE**

(30) Priority: 18.03.2024 JP 2024042193; 11.12.2024 JP 2024216240
(71) Applicant: Yanmar Holdings Co., Ltd., Osaka-shi, Osaka (JP)
(72) Inventor: MATSUNAGA, Daichi, Osaka (JP); TENTORA, Takafumi, Osaka (JP); TOSHINAGA, Kazuteru, Osaka (JP)
(74) Representative: Novagraaf International SA

(57) **Abstract**

[Problem] Provided is an engine device in which good exhaust gas properties can be maintained without an increase in size of a device for purifying an exhaust gas exhausted from an ammonia mixed combustion engine.

[Solution] An engine device 1 which is an ammonia mixed combustion engine operated by a main fuel containing ammonia and a hydrocarbon-based auxiliary fuel being combusted controls, by a control device 9, at least one of an air excess ratio of an air-fuel mixture of the main fuel and air and an injection timing of the auxiliary fuel so that a proportion of exhausted unburned ammonia and nitrogen oxides contained in an exhaust gas achieves a predetermined proportion.

## Description

### TECHNICAL FIELD

The present invention relates to an engine device comprising an ammonia mixed combustion engine operated by a main fuel containing at least ammonia and a hydrocarbon-based auxiliary fuel being combusted.

### BACKGROUND ART

Conventionally, in engine devices, there is an engine device which comprises an ammonia mixed combustion engine operated by a main fuel containing at least ammonia and a hydrocarbon-based auxiliary fuel such as light oil being combusted. It is required for the engine device to improve properties of an exhaust gas exhausted from the ammonia mixed combustion engine.

For example, in Patent Document 1, an exhaust gas purification device of purifying an exhaust gas of an internal combustion engine fueled by ammonia comprises a catalyst having a function to reduce nitrogen oxides and a function to oxidize ammonia, an adsorption material which is arranged on the lower stream side of the catalyst and adsorbs ammonia in the exhaust gas, an active state detection part which detects the active state of the catalyst, a concentration acquisition part which acquires the concentration of the exhaust gas on the lower stream side of the adsorption material, and a control part which controls the amount of supplied ammonia from a fuel supply part supplying ammonia to the internal combustion engine. When the catalyst is in the active state, the control part uses the concentration of the exhaust gas acquired from the concentration acquisition part to control the amount of supplied ammonia so that the concentration of the exhaust gas on the lower stream side of the adsorption material is kept constant.

Further, in Patent Document 2, an ammonia engine system comprises an ammonia engine which is fueled by ammonia, and an ammonia cracker device which contains an ammonia cracker catalyst cracking ammonia and cracks ammonia to create hydrogen, and an ammonia oxidation device is provided between the ammonia engine and the ammonia cracker device.

### PRIOR ART DOCUMENT

### PATENT DOCUMENT

Patent Document 1: Japanese Patent Laid-Open No. 2020-90894
Patent Document 2: Japanese Patent Laid-Open No. 2010-121509

### SUMMARY OF INVENTION

### TECHNICAL PROBLEM

However, the conventional ammonia mixed combustion engine as in Patent Document 1 can purify the exhaust gas by reducing nitrogen oxides in the exhaust gas with the catalyst and by oxidizing ammonia, but it does not control the amount and ratio of nitrogen oxides and ammonia in the exhaust gas. Because of this, constructing a device to purify the exhaust gas is needed on the basis of the estimated maximum value of nitrogen oxides and unburned ammonia in the exhaust gas, which may increase the capacity and size of the device. In addition, when the amount of ammonia supplied to such an ammonia mixed combustion engine is reduced, inputting another fuel is needed to obtain equivalent output, which may increase the amount of greenhouse effect gas emissions (GHG) causing a reduction in marketability.

Moreover, in the conventional ammonia mixed combustion engine as in Patent Document 2, in order to improve incombustibility of ammonia, ammonia is mixed and burned with hydrogen; however, improving the deteriorated exhaust gas properties resulted from that combustion and purifying the exhaust gas are not considered.

The present invention aims at providing an engine device which can maintain good exhaust gas properties without an increase in size of a device for purifying an exhaust gas exhausted from an ammonia mixed combustion engine.

### SOLUTION TO PROBLEM

In order to solve the above problems, an engine device of the present invention is an ammonia mixed combustion engine operated by a main fuel containing ammonia and a hydrocarbon-based auxiliary fuel being combusted, wherein at least one of an air excess ratio of an air-fuel mixture of the main fuel and air and an injection timing of the auxiliary fuel is controlled so that a proportion of exhausted unburned ammonia and nitrogen oxides contained in the exhaust gas achieves a predetermined proportion.

### ADVANTAGEOUS EFFECTS OF INVENTION

According to the present invention, provided is an engine device which can maintain good exhaust gas properties without an increase in size of a device for purifying the exhaust gas exhausted from the ammonia mixed combustion engine.

### BRIEF DESCRIPTION OF DRAWINGS

FIG. 1 is a schematic view illustrating an engine device according to an embodiment of the present invention.
FIG. 2 is a schematic view illustrating an ammonia mixed combustion engine in the engine device according to an embodiment of the present invention.
FIG. 3 is a graph illustrating on a map the amount of unburned ammonia in the exhaust gas with respect to the relationship between the injection timing of an auxiliary fuel and the air excess ratio of a main fuel in the ammonia mixed combustion engine.
FIG. 4 is a graph illustrating on a map the amount of nitrogen oxides in the exhaust gas with respect to the relationship between the injection timing of the auxiliary fuel and the air excess ratio of the main fuel in the ammonia mixed combustion engine.
FIG. 5 is a graph illustrating on a map the proportion of exhausted unburned ammonia and nitrogen oxides in the exhaust gas with respect to the relationship between the injection timing of the auxiliary fuel and the air excess ratio of the main fuel in the ammonia mixed combustion engine.
FIG. 6 is a graph illustrating on a map the amount of unburned ammonia in the exhaust gas with respect to the relationship between the hydrogen mixed ratio and the air excess ratio of the main fuel in the ammonia mixed combustion engine.
FIG. 7 is a graph illustrating on a map the amount of nitrogen oxides in the exhaust gas with respect to the relationship between the hydrogen mixed ratio and the air excess ratio of the main fuel in the ammonia mixed combustion engine.
FIG. 8 is a schematic view illustrating the engine device according to another example of the present invention.
FIG. 9 is a graph illustrating a map of NO + NO₂ in the relationship between the combustion temperature and the fuel air equivalence ratio in the ammonia mixed combustion engine.
FIG. 10 is a graph illustrating a map of unburned ammonia in the relationship between the combustion temperature and the fuel air equivalence ratio in the ammonia mixed combustion engine.

### DESCRIPTION OF EMBODIMENTS

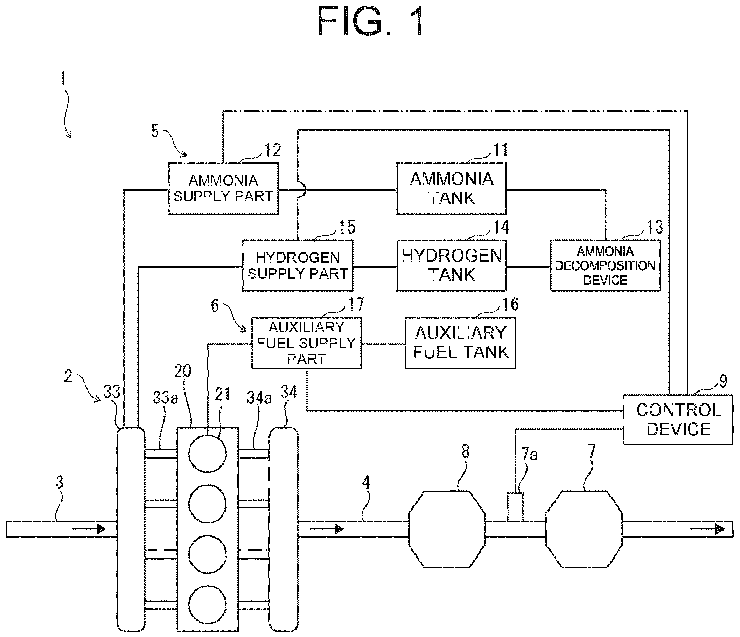

An engine device 1 of an embodiment of the present invention will be explained with reference to the drawings. As shown in FIG. 1, the engine device 1 comprises an ammonia mixed combustion engine 2, an intake passage 3, an exhaust passage 4, a main fuel supply device 5 and an auxiliary fuel supply device 6. Further, the engine device 1 comprises a selective reduction catalyst 7, an ammonia adsorption catalyst 8 and a control device 9.

In this embodiment, the engine device 1 is an ammonia mixed combustion engine especially, and the ammonia mixed combustion engine 2 is configured to be operated by at least one fuel of a main fuel containing at least ammonia and a hydrocarbon-based auxiliary fuel such as light oil being combusted. The air-fuel mixture of the main fuel and air is supplied to a combustion chamber 21a of each cylinder 21 of the ammonia mixed combustion engine 2, and the air-fuel mixture of the main fuel and the auxiliary fuel are combusted in the combustion chamber 21a. The engine device 1 controls the supply of the main fuel and the auxiliary fuel by the control device 9.

The main fuel supply device 5 comprises an ammonia tank 11, an ammonia supply part 12, an ammonia decomposition device 13, a hydrogen tank 14 and a hydrogen supply part 15.

The ammonia tank 11 is filled with ammonia as the main fuel from the outside and stores it in the liquid form, and the ammonia supply part 12 is structured to have a pump or the like which is connected to the ammonia tank 11 and is controlled by the control device 9 to introduce ammonia from the ammonia tank 11 to supply the ammonia fuel to an ammonia injection part 35 of the ammonia mixed combustion engine 2 in the liquid or gaseous form.

The ammonia decomposition device 13 introduces ammonia from the ammonia tank 11, decomposes and reforms it to generate a hydrogen fuel, and stores hydrogen in the hydrogen tank 14 in the gaseous form. The hydrogen supply part 15 is structured to have a pump or the like which is connected to the hydrogen tank 14 and is controlled by the control device 9 to introduce hydrogen from the hydrogen tank 14 to supply the hydrogen fuel in the gaseous form to the hydrogen injection part 36 of the ammonia mixed combustion engine 2.

The auxiliary fuel supply device 6 comprises an auxiliary fuel tank 16 and an auxiliary fuel supply part 17. The auxiliary fuel tank 16 stores a hydrocarbon-based auxiliary fuel such as light oil in the liquid form, the auxiliary fuel supply part 17 is structured to have a pump and the like connected to the auxiliary fuel tank 16 and is controlled by the control device 9 to introduce the auxiliary fuel from the auxiliary fuel tank 16 to supply the auxiliary fuel in the liquid form to the auxiliary fuel injection part 26 in the ammonia mixed combustion engine 2.

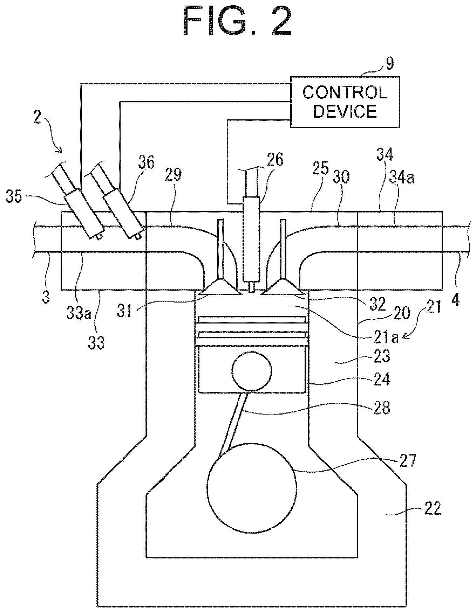

The ammonia mixed combustion engine 2 is a four-stroke engine, for example, and is structured to comprise a plurality of cylinders 21 and a crankcase 22 (see FIG. 2) in a cylinder block 20. In FIG. 1, while four cylinders 21 are shown, the number of cylinders 21 is not limited to four. As shown in FIG. 2, the cylinder 21 is composed of the cylinder body 23, the piston 24 and a cylinder head 25.

The cylinder body 23 is cylindrically formed in the cylinder block 20, and the piston 24 is slidably contained in the cylinder body 23, for example. The cylinder head 25 is attached to the upper side of the cylinder body 23, and the combustion chamber 21a is formed within the cylinder body 23 and the cylinder head 25. In the cylinder head 25, the auxiliary fuel injection part 26 which injects the auxiliary fuel to the combustion chamber 21a is provided.

For example, the auxiliary fuel injection part 26 is composed of a device such as a micro-pilot type injector which injects the auxiliary fuel in a small amount. In the auxiliary fuel injection part 26, the amount injected, the injection pressure, the injection timing and the like of the auxiliary fuel are controlled by the control device 9. The auxiliary fuel injection part 26 combusts the air-fuel mixture of the main fuel and air in the combustion chamber 21a by compressing and spontaneously igniting it with the hydrocarbon-based auxiliary fuel in the liquid form.

Each cylinder body 23 of the plurality of cylinders 21 communicates with the crankcase 22, and a crankshaft 27 is rotatably supported by a shaft to the crankcase 22. The piston 24 of each cylinder 21 is coupled to the crankshaft 27 via a connecting rod 28, and a reciprocating motion of the piston 24 is converted into a rotational motion of the crankshaft 27 via the connecting rod 28.

The cylinder head 25 has an intake port 29 and an exhaust port 30 communicating with the combustion chamber 21a of the cylinder body 23, and comprises an intake valve 31 and an exhaust valve 32 respectively opening and closing the intake port 29 and the exhaust port 30 with respect to the combustion chamber 21a.

The intake port 29 is connected to the intake passage 3 and introduces air supplied from the intake passage 3 to the combustion chamber 21a, and the exhaust port 30 is connected to the exhaust passage 4 and exhausts the exhaust gas generated in the combustion chamber 21a to the exhaust passage 4. When the intake valve 31 is opened, the air-fuel mixture of the main fuel and air can be taken to the combustion chamber 21a via the intake port 29 while when the exhaust valve 32 is opened, the exhaust gas generated in the combustion chamber 21a can be exhausted via the exhaust port 30.

The intake passage 3 is connected to the plurality of cylinders 21 of the ammonia mixed combustion engine 2 and supplies compressed and cooled air to each cylinder 21. The air-fuel mixture of air supplied from the intake passage 3 and the main fuel supplied from the main fuel supply device 5 is supplied from the intake passage 3 to the combustion chamber 21a of each cylinder 21. For example, the intake passage 3 is connected to the ammonia mixed combustion engine 2 via an intake manifold 33. The intake manifold 33 has branch flow paths 33a which branch into the plurality of cylinders 21, and each branch flow path 33a is connected to each intake port 29.

Meanwhile, in the intake passage 3, the branch flow path 33a, the intake port 29 or the cylinder head 25, the ammonia injection part 35 to supply the ammonia fuel as the main fuel and the hydrogen injection part 36 to supply the hydrogen fuel are provided from the main fuel supply device 5 toward each combustion chamber 21a.

**In** the ammonia injection part 35 and the hydrogen injection part 36, the amount injected, the injection timing and the like of the ammonia fuel and the hydrogen fuel are controlled by the control device 9. When air supplied from the intake passage 3 and the amount of the injected ammonia and hydrogen fuels are controlled by the control device 9, the air excess ratio in the air-fuel mixture supplied to the combustion chamber 21a is controlled. The ammonia injection part 35 and the hydrogen injection part 36 may be composed of an admission valve, an injector and the like which are provided in each combustion chamber 21a correspondingly and inject the ammonia or hydrogen fuel.

Meanwhile, although in FIG. 2, an example that the ammonia injection part 35 and the hydrogen injection part 36 are provided in the intake manifold 33, inject the ammonia fuel and the hydrogen fuel to the branch flow path 33a to supply ammonia fuel and the hydrogen fuel to the combustion chamber 21a via the intake port 29 has been shown, the present invention is not limited to this example. Alternatively, the ammonia injection part 35 and the hydrogen injection part 36 may be provided in the intake passage 3, inject the ammonia fuel and the hydrogen fuel to the intake passage 3 to supply them to the combustion chamber 21a via the intake passage 3 and the intake port 29, or may be provided in the cylinder body 23 and the cylinder head 25, and directly inject and supply the ammonia fuel and the hydrogen fuel to the combustion chamber 21a.

The exhaust passage 4 is connected to the plurality of cylinders 21 of the ammonia mixed combustion engine 2, and flows and exhausts the exhaust gas generated in each cylinder 21. For example, the exhaust passage 4 is connected to the ammonia mixed combustion engine 2 via an exhaust manifold 34. The exhaust manifold 34 has branch flow paths 34a which branch into the plurality of cylinders 21, and each branch flow path 34a is connected to each exhaust port 30.

The exhaust passage 4 is connected to the selective reduction catalyst 7 and the ammonia adsorption catalyst 8 on the lower stream side of the exhaust direction to treat the exhaust gas flowing through the exhaust passage 4. The selective reduction catalyst 7 and the ammonia adsorption catalyst 8 are arranged through the exhaust passage 4 in series.

The selective reduction catalyst 7 is provided in the exhaust passage 4, and selectively reduces nitrogen oxides contained in the exhaust gas flowing through the exhaust passage 4 by a reducing agent such as urea water to purify ammonia and nitrogen oxides in the exhaust gas. On the upper stream side than the selective reduction catalyst 7 in the exhaust direction, a reducing agent supply part 7a to supply the reducing agent toward the selective reduction catalyst 7 is provided in the exhaust passage 4. In the reducing agent supply part 7a, the amount of the supplied reducing agent is controlled by the control device 9.

For example, the selective reduction catalyst 7 reacts and reduces ammonia and nitrogen oxides with one-to-one ratio (proportion) of concentration or number of moles, and the reducing agent supply part 7a is controlled by the control device 9 to supply the reducing agent so that the one-to-one concentration or number of moles of ammonia and nitrogen oxides introduced to the selective reduction catalyst 7 along with the exhaust gas is achieved.

The ammonia adsorption catalyst 8 is provided in the exhaust passage 4 on the upper stream side than the selective reduction catalyst 7 in the exhaust direction, and adsorbs ammonia contained in the exhaust gas flowing through the exhaust passage 4 to purify ammonia in the exhaust gas. That is to say, the ammonia adsorption catalyst 8 adsorbs ammonia to reduce the concentration and/or the number of moles of ammonia introduced by the exhaust gas into the selective reduction catalyst 7.

For example, the ammonia adsorption catalyst 8 may be composed of activated carbon, zeolites, Prussian blue, MOF (referred to as porous metal complex) or PCP (referred to as porous coordination polymer) and the like as an ammonia adsorbing material. Alternatively, in addition to the ammonia adsorbing function, the ammonia adsorption catalyst 8 may be composed of Fe ion-exchange zeolites, Cu ion-exchange zeolites and the like as a material which also reacts with nitrogen oxides.

Meanwhile, in a case where ammonia is adsorbed to the ammonia adsorption catalyst 8, the ammonia adsorption catalyst 8 is configured to desorb ammonia from the ammonia adsorption catalyst 8 by wind power of the exhaust gas or the reaction with nitrogen oxides when the exhaust gas is passed through the ammonia adsorption catalyst 8. At this time, the ammonia adsorption catalyst 8 may be capable of desorbing ammonia at a certain desorption temperature or more.

The control device 9 is a computer such as an ECU (Engine Control Unit) to control the operation of the ammonia mixed combustion engine 2, comprises CPU, ROM, RAM, etc., and is configured to control the respective parts of the ammonia mixed combustion engine 2. The control device 9 may store various programs for controlling the ammonia mixed combustion engine 2, and read and execute the programs to control the ammonia mixed combustion engine 2.

Next, control over the supply of the main fuel such as ammonia and hydrogen fuels and the auxiliary fuel such as light oil in the engine device 1 will be explained.

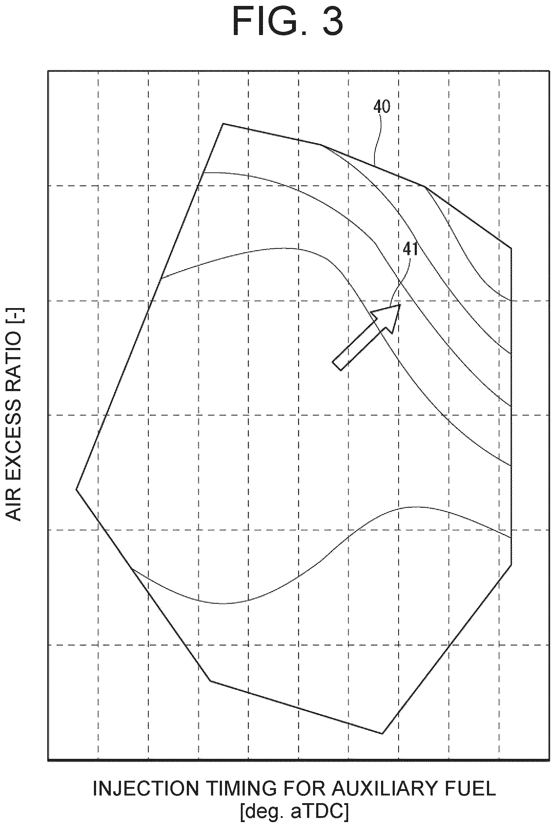

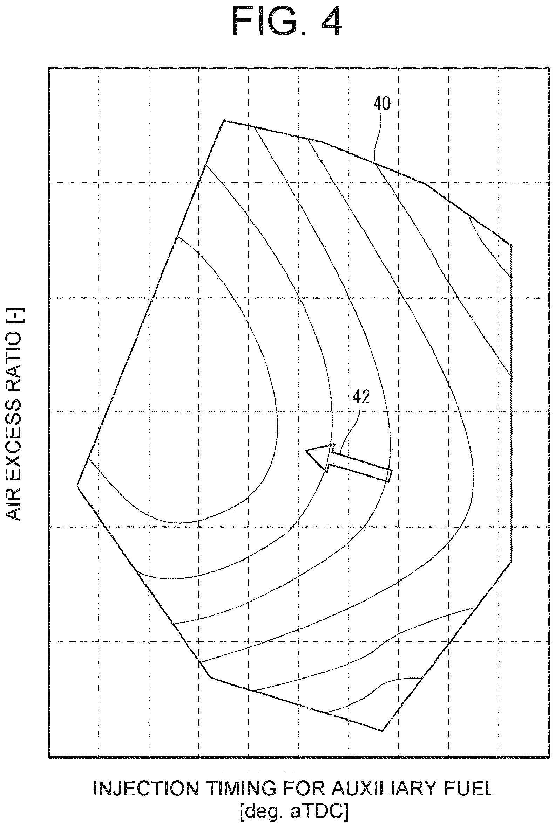

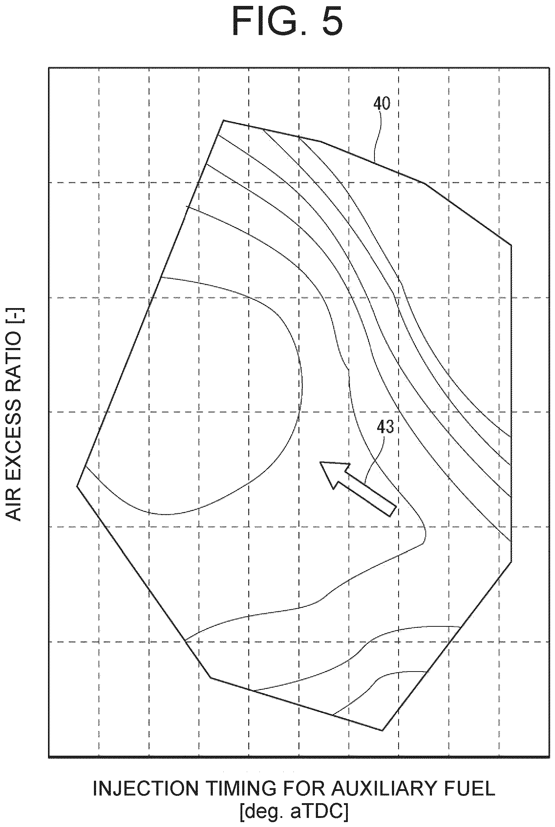

In FIG. 3-FIG. 5, the injection timing of the auxiliary fuel supplied to the combustion chamber 21a is indicated in the axis of abscissa, and the air excess ratio of the air-fuel mixture to ammonia supplied to the combustion chamber 21a is indicated in the axis of ordinate. In FIG. 3, with respect to the relationship between the auxiliary fuel injection timing and the air excess ratio, a stable region 40 in which the ammonia mixed combustion engine 2 can be stably operated is shown while the amount of unburned ammonia contained in the exhaust gas in a range of the stable region 40 is shown on a map, and unburned ammonia increases toward the direction indicated with an outline arrow 41. **In** FIG. 4, with respect to the relationship between the auxiliary fuel injection timing and the air excess ratio, the stable region 40 in which the ammonia mixed combustion engine 2 can be stably operated is shown while the amount of nitrogen oxides contained in the exhaust gas in a range of the stable region 40 is shown on a map, and nitrogen oxides is increased toward the direction indicated with an outline arrow 42. **In** FIG. 5, with respect to the relationship between the auxiliary fuel injection timing and the air excess ratio, the stable region 40 in which the ammonia mixed combustion engine 2 can be stably operated is shown while the proportion of exhausted unburned ammonia and nitrogen oxides contained in the exhaust gas in a range of the stable region 40 is shown on a map, in which the proportion of ammonia to nitrogen oxides is reduced toward the direction indicated with an outline arrow 43.

Accordingly, based on the relationship between the injection timing of the auxiliary fuel and the air excess ratio of the main fuel, the control device 9 controls at least one of the air excess ratio of the air-fuel mixture as the main fuel and the injection timing of the auxiliary fuel to achieve a predetermined desired proportion (predetermined proportion which is a target value or target range) for the proportion of exhausted unburned ammonia and nitrogen oxides contained in the exhaust gas generated due to combustion of the main fuel and the auxiliary fuel. The control device 9 controls the supply of ammonia from the ammonia supply part 12 and the ammonia injection part 35 and the intake of air in the intake passage 3 to control the air excess ratio of the main fuel. The control device 9 controls the supply of the auxiliary fuel from the auxiliary fuel injection part 26 to control the injection timing of the auxiliary fuel.

For example, when the proportion of exhausted unburned ammonia is small, in order to increase unburned ammonia, the control device 9 controls the air excess ratio of the main fuel to be increased or decreased, or controls the injection timing of the auxiliary fuel to be retarded. When the proportion of exhausted nitrogen oxides is small, in order to increase nitrogen oxides, the control device 9 controls the air excess ratio of the main fuel to be increased or decreased, or controls the injection timing of the auxiliary fuel to be advanced.

Meanwhile, when the ammonia mixed combustion engine 2 is preliminarily and experimentally operated, it is beneficial for the engine device 1 to acquire various data on the proportion of exhausted unburned ammonia and nitrogen oxides in the exhaust gas with respect to various data on the injection timing of the auxiliary fuel and the air excess ratio of the main fuel so as to previously create and store a map showing the proportion of exhausted unburned ammonia and nitrogen oxides in the exhaust gas in a range of the stable region 40 with respect to the relationship between the injection timing of the auxiliary fuel and the air excess ratio of the main fuel. Alternatively, when the ammonia mixed combustion engine 2 is actually operated, the engine device 1 may acquire and accumulate various data on the proportion of exhausted unburned ammonia and nitrogen oxides in the exhaust gas with respect to various data on the injection timing of the auxiliary fuel and the air excess ratio of the main fuel so as to create and store a map showing the proportion of exhausted unburned ammonia and nitrogen oxides in the exhaust gas in a range of the stable region 40 with respect to the relationship between the injection timing of the auxiliary fuel and the air excess ratio of the main fuel.

Then, the control device 9 acquires current data on the injection timing of the auxiliary fuel and the air excess ratio of the main fuel and refers to the map showing the stored proportion of exhausted unburned ammonia and nitrogen oxides to calculate the amount of change in the injection timing of the auxiliary fuel and the air excess ratio of the main fuel which is required to achieve a predetermined desired proportion and control the injection timing of the auxiliary fuel and the air excess ratio of the main fuel based on that amount of change.

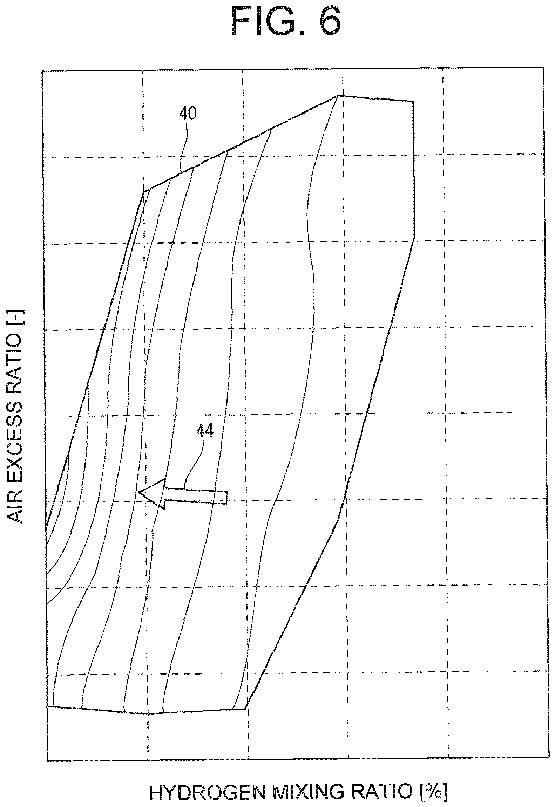

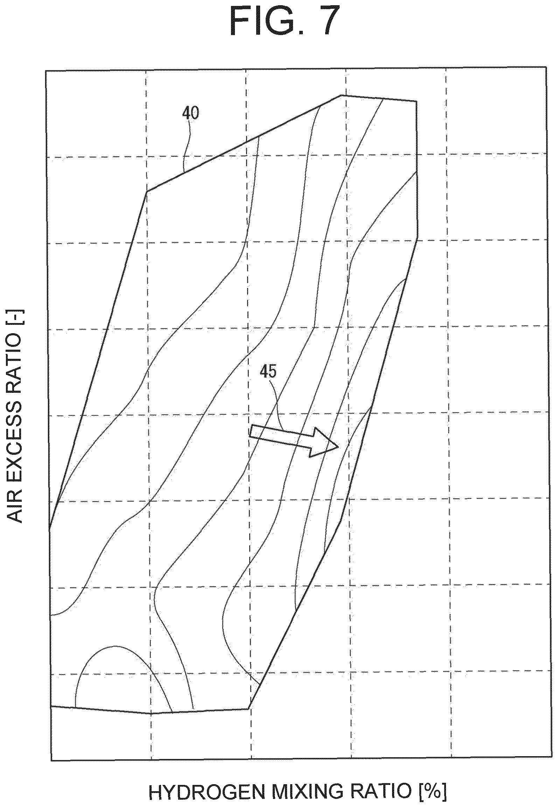

Further, in FIG. 6-FIG. 7, the hydrogen mixed ratio (hydrogen mixed proportion) of the main fuel composed of ammonia and hydrogen supplied to the combustion chamber 21a is indicated in the axis of abscissa, and the air excess ratio of the main fuel to the air-fuel mixture supplied to the combustion chamber 21a is indicated by the axis of ordinate. **In** FIG. 6, with respect to the relationship between the hydrogen mixed ratio and the air excess ratio, the stable region 40 in which the ammonia mixed combustion engine 2 can be stably operated is shown while the amount of unburned ammonia contained in the exhaust gas in a range of the stable region 40 is shown on a map, and unburned ammonia increases toward the direction indicated with an outline arrow 44. **In** FIG. 7, with respect to the relationship between the hydrogen mixed ratio and the air excess ratio, the stable region 40 in which the ammonia mixed combustion engine 2 can be stably operated is shown while the amount of nitrogen oxides contained in the exhaust gas in a range of the stable region 40 is shown on a map, and nitrogen oxides increases toward the direction indicated with an outline arrow 45. Meanwhile, although not shown, also with respect to the relationship between the hydrogen mixed ratio and the air excess ratio, the proportion of exhausted unburned ammonia and nitrogen oxides contained in the exhaust gas in a range of the stable region in which the ammonia mixed combustion engine 2 can be stably operated can be shown on a map, in which the proportion of exhausted unburned ammonia and nitrogen oxides which allows more stable combustion is achieved toward a predetermined direction.

For this reason, based on the relationship between the hydrogen mixed ratio and the air excess ratio of the main fuel, and instead of controlling the air excess ratio of the air-fuel mixture of the main fuel and the injection timing of the auxiliary fuel, the control device 9 controls the proportion of mixed ammonia and hydrogen in the main fuel (ammonia mixed ratio or hydrogen mixed ratio) to achieve a predetermined desired proportion (predetermined proportion which is a target value or a target range) for the proportion of exhausted unburned ammonia and nitrogen oxides contained in the exhaust gas generated due to combustion of the main fuel and the auxiliary fuel. The control device 9 controls the supply of ammonia from the ammonia injection part 35 and the supply of hydrogen from the hydrogen injection part 36 to control the proportion of the mixed main fuel.

For example, when the proportion of exhausted unburned ammonia is small, in order to increase unburned ammonia, the control device 9 controls the proportion of mixed ammonia in the main fuel (ammonia mixed ratio) to be increased, or controls the proportion of mixed hydrogen (hydrogen mixed ratio) to be decreased. When the proportion of exhausted nitrogen oxides is small, in order to increase nitrogen oxides, the control device 9 controls the proportion of mixed hydrogen in the main fuel (hydrogen mixed ratio) to be increased or controls the proportion of mixed ammonia (ammonia mixed ratio) to be decreased.

Meanwhile, when the ammonia mixed combustion engine 2 is preliminarily and experimentally operated, it is beneficial for the engine device 1 to acquire various data on the proportion of exhausted unburned ammonia and nitrogen oxides in the exhaust gas with respect to various data on the hydrogen mixed ratio of the main fuel and the air excess ratio of the main fuel so as to previously create and store a map showing the proportion of exhausted unburned ammonia and nitrogen oxides in the exhaust gas in a range of the stable region 40 with respect to the relationship between the hydrogen mixed ratio of the main fuel and the air excess ratio of the main fuel. Alternatively, when the ammonia mixed combustion engine 2 is actually operated, the engine device 1 may acquire and accumulate various data on the proportion of exhausted unburned ammonia and nitrogen oxides in the exhaust gas with respect to various data on the hydrogen mixed ratio of the main fuel and the air excess ratio of the main fuel to create and store a map showing the proportion of exhausted unburned ammonia and nitrogen oxides in the exhaust gas in a range of the stable region 40 with respect to the relationship between the hydrogen mixed ratio of the main fuel and the air excess ratio of the main fuel.

Then, the control device 9 acquires current data on the hydrogen mixed ratio of the main fuel and the air excess ratio of the main fuel, refers to the map showing the stored proportion of exhausted unburned ammonia and nitrogen oxides to calculate the amount of change in the hydrogen mixed ratio of the main fuel and the air excess ratio of the main fuel which is required to achieve a predetermined desired proportion, and control the hydrogen mixed ratio of the main fuel and the air excess ratio of the main fuel based on that amount of change.

Alternatively, in addition to the relationship between the injection timing of the auxiliary fuel and the air excess ratio of the main fuel, and based on the relationship between the injection timing of the auxiliary fuel and the air excess ratio, the control device 9 may control at least one of the air excess ratio of the air-fuel mixture in the main fuel and the injection timing of the auxiliary fuel, and the hydrogen mixed ratio of the main fuel to achieve a predetermined desired proportion for the proportion of exhausted unburned ammonia and nitrogen oxides contained in the exhaust gas generated due to combustion of the main fuel and the auxiliary fuel.

As described above, according to the present invention, the engine device 1 which is an ammonia mixed combustion engine device operated by the main fuel containing ammonia and the hydrocarbon-based auxiliary fuel being combusted controls, by the control device 9, at least one of the air excess ratio of the air-fuel mixture of the main fuel and air and the injection timing of the auxiliary fuel to achieve a predetermined desired proportion (predetermined proportion) for the proportion of exhausted unburned ammonia and nitrogen oxides contained in the exhaust gas.

For this reason, according to the engine device 1 of the present invention, without changing the load of operating the ammonia mixed combustion engine 2, and the proportion of inputted ammonia (proportion of supplied ammonia) of the main fuel, the proportion of exhausted unburned ammonia and nitrogen oxides in the exhaust gas can be regulated, allowing the amount of greenhouse effect gas emissions (GHG) to be reduced.

Alternatively, the engine device 1 mixes hydrogen to ammonia to create the main fuel and controls, by the control device 9, the proportion of mixed ammonia and hydrogen in the main fuel to achieve a predetermined desired proportion (predetermined proportion) for the proportion of exhausted unburned ammonia and nitrogen oxides contained in the exhaust gas.

Because of this, according to the engine device 1 of the present invention, although unburned ammonia and nitrogen oxides in the exhaust gas have a trade-off relationship in terms of purification, when the proportion of mixed ammonia and hydrogen in the main fuel is regulated, the proportion of exhausted unburned ammonia and nitrogen oxides in the exhaust gas can be regulated.

Alternatively, the engine device 1 mixes hydrogen to ammonia to create the main fuel and controls, by the control device 9, at least one of the air excess ratio of the air-fuel mixture of the main fuel and air, the injection timing of the auxiliary fuel and the proportion of mixed ammonia and hydrogen in the main fuel to achieve a predetermined desired proportion (predetermined proportion) for the proportion of exhausted unburned ammonia and nitrogen oxides contained in the exhaust gas.

Thanks to this, according to the engine device 1 of the present invention, when the air excess ratio of the air-fuel mixture of the main fuel and air, the injection timing of the auxiliary fuel, and the proportion of mixed ammonia and hydrogen in the main fuel are appropriately combined and regulated, the proportion of exhausted unburned ammonia and nitrogen oxides in the exhaust gas can be regulated more appropriately.

Further, the engine device 1 of the present invention controls the proportion of exhausted unburned ammonia to achieve a predetermined desired proportion by performing, by the control device 9, at least one of increasing or decreasing the air excess ratio of the main fuel, retarding the injection timing of the auxiliary fuel, and increasing the proportion of mixed ammonia of the main fuel to increase the proportion of exhausted unburned ammonia in the proportion of exhausted unburned ammonia and nitrogen oxides in the exhaust gas.

Hence, when the exhaust gas is purified by the selective reduction catalyst 7 and the like, and in a case where the occurrence of nitrogen oxides equal to or higher than the proper amount for purification, for example, nitrogen oxides equal to or higher than the volume of the selective reduction catalyst 7 is predicted in the exhaust gas, the engine device 1 can increase the ammonia mixed combustion ratio to decrease the amount of exhausted nitrogen oxides and increase the amount of exhausted unburned ammonia. Because of this, the proper amount of nitrogen oxides for purification can be generated in the exhaust gas, and the exhaust gas can be purified appropriately.

Moreover, the engine device 1 of the present invention controls the proportion of exhausted nitrogen oxides to achieve a predetermined desired proportion by performing, by the control device 9, at least one of increasing or decreasing the air excess ratio of the main fuel, advancing the injection timing of the auxiliary fuel, and increasing the proportion of mixed hydrogen in the main fuel (hydrogen mixed ratio) to increase the proportion of exhausted nitrogen oxides in the proportion of exhausted unburned ammonia and nitrogen oxides in the exhaust gas.

As a result of this, when the exhaust gas is purified by the ammonia adsorption catalyst 8 and the like, and in a case where the occurrence of unburned ammonia equal to or higher than the proper amount for purification, for example, unburned ammonia equal to or higher than the volume of the ammonia adsorption catalyst 8 is predicted in the exhaust gas, the engine device 1 can decrease the ammonia mixed combustion ratio to decrease the amount of exhausted unburned ammonia to increase the amount of exhausted nitrogen oxides. On this account, the proper amount of unburned ammonia for purification can be generated in the exhaust gas, and the exhaust gas can be purified appropriately.

In addition, the engine device 1 of the present invention comprises the selective reduction catalyst 7 for reducing nitrogen oxides contained in the exhaust gas by a reducing agent, and the ammonia adsorption catalyst 8 for absorbing unburned ammonia contained in the exhaust gas.

Therefore, the engine device 1 can regulate the proportion of exhausted unburned ammonia and nitrogen oxides contained in the exhaust gas in coordination with purification of the exhaust gas by the selective reduction catalyst 7 and the ammonia adsorption catalyst 8.

Also, the engine device 1 of the present invention reforms ammonia to create the hydrogen fuel by the ammonia decomposition device 13 and the like.

Because of this, possession of a large amount of hydrogen as a fuel is not necessary for the engine device 1, and hydrogen created by reforming ammonia can be used as the main fuel.

Meanwhile, although in the above embodiment, an example that ammonia is introduced from the ammonia tank 11 by the ammonia decomposition device 13 to decompose and reform it to create the hydrogen fuel, and hydrogen is stored in the hydrogen tank 14 in the gaseous form has been explained, the present invention is not limited to this example; and hydrogen may be filled from the outside in the gaseous form to be stored in the hydrogen tank 14.

Moreover, in the above embodiment, although an example that the engine device 1 mixes hydrogen to ammonia to create the main fuel and controls, by the control device 9, at least one of the air excess ratio of the air-fuel mixture of the main fuel and air, the injection timing of the auxiliary fuel, and the proportion of mixed ammonia and hydrogen in the main fuel to achieve a predetermined desired proportion for the proportion of exhausted unburned ammonia and nitrogen oxides contained in the exhaust gas has been explained, the present invention is not limited to this example.

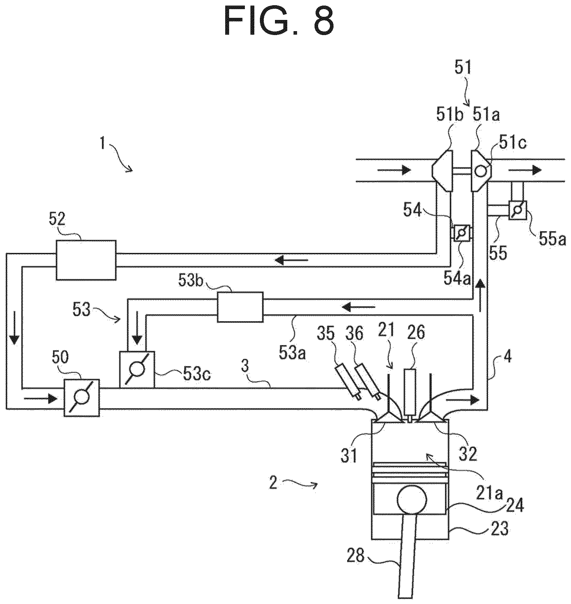

In another example, as shown in FIG. 8, in addition to the structure of the above embodiment, the engine device 1 comprises an intake throttle 50, a turbocharger 51, an intercooler 52 and a recirculation device 53 (EGR device). Further, the engine device 1 comprises an intake bypass passage 54 and a waste gate 55.

And in addition to the air excess ratio of the air-fuel mixture, the injection timing of the auxiliary fuel and the proportion of the mixed main fuel described above, or in stead of the air excess ratio of the air-fuel mixture, the injection timing of the auxiliary fuel and the proportion of the mixed main fuel described above, the engine device 1 is configured to control the proportion of exhausted nitrogen oxides to achieve a predetermined desired proportion (predetermined proportion) by performing at least one of decreasing the EGR ratio of the recirculation device 53, increasing the injection pressure of the auxiliary fuel by the auxiliary fuel injection part 26, increasing the amount of air bypassed in the intake bypass passage 54 from the intake passage 3 to the exhaust passage 4 (i.e., the amount of bypassed intake air), increasing the degree of opening of the waste gate 55 in the turbocharger 51, and increasing the degree of opening of a variable nozzle 51c in the turbocharger 51 to increase the proportion of exhausted nitrogen oxides in the proportion of exhausted unburned ammonia and nitrogen oxides in the exhaust gas.

Particularly, in the engine device 1, the turbocharger 51, the intercooler 52 and the intake throttle 50 are provided in the order from the upper stream side of the intake passage 3 in the intake direction.

The turbocharger 51 has a turbine 51a arranged in the exhaust passage 4 and a compressor 51b arranged in the exhaust passage 4, and in the turbine 51a, the variable nozzle 51c is provided to regulate the passage area of the exhaust gas flowing through the turbine 51a. The turbocharger 51 rotates the turbine 51a with the exhaust gas flowing through the exhaust passage 4 and drives the compressor 51b with rotation power of the turbine 51a to compress air flowing through the intake passage 3.

The recirculation device 53 comprises a recirculation passage 53a, a recirculation cooler 53b and a recirculation valve 53c. The recirculation passage 53a is connected to the exhaust passage 4 on the upper stream side of the exhaust direction than the turbocharger 51 (turbine 51a) and is connected to the intake passage 3 on the lower stream side of the intake direction than the intercooler 52. By the recirculation cooler 53b, the recirculation device 53 cools and recirculates the exhaust gas flowing through the exhaust passage 4 on the upper stream side of the exhaust direction than the turbocharger 51, and supplies it to the intake passage 3 on the lower stream side of the intake direction than the intercooler 52. The recirculation device 53 regulates the degree of opening of the recirculation valve 53c by the control device 9, and regulates the flow rate of the recirculated exhaust gas flowing into the intake passage 3 to regulate the amount of oxygen in air flowing through the intake passage 3.

In addition, in the engine device 1, in order to bypass the lower stream side than the turbocharger 51 in the intake direction of the intake passage 3, and the upper stream side than the turbocharger 51 in the exhaust direction of the exhaust passage 4, the intake bypass passage 54 is provided in which an intake bypass valve 54a is provided to regulate the amount of bypassed intake air. In the engine device 1, to bypass the upper stream side and the lower stream side than the turbocharger 51 in the exhaust direction of the exhaust passage 4, the waste gate 55 is provided, and in the waste gate 55, a waste gate valve 55a is provided to regulate the amount of bypassed exhaust gas.

And the engine device 1 controls the recirculation valve 53c of the recirculation device 53 by the control device 9 and reduces the EGR ratio which is the proportion of the exhaust gas recirculated from the exhaust passage 4 to the intake passage 3 by the recirculation device 53. This reduces the exhaust gas recirculated to intake air to elevate the combustion temperature in the combustion chamber 21a and increases the proportion of exhausted nitrogen oxides in the exhaust gas to control the proportion of exhausted nitrogen oxides to achieve a predetermined desired proportion (predetermined proportion).

Alternatively, the engine device 1 controls the auxiliary fuel injection part 26 by the control device 9 to increase the injection pressure of the auxiliary fuel injected to the combustion chamber 21a. This controls the proportion of exhausted nitrogen oxides to achieve a predetermined desired proportion by elevating the combustion temperature in the combustion chamber 21a with combustion of the auxiliary fuel having the increased injection pressure and increasing the proportion of exhausted nitrogen oxides in the exhaust gas.

Alternatively, the engine device 1 controls the intake bypass valve 54a by the control device 9 to increase the amount of bypassed intake air to the exhaust passage 4. This controls the proportion of exhausted nitrogen oxides to achieve a predetermined desired proportion by decreasing the proportion of air in intake air, increasing the proportion of the fuel, elevating the combustion temperature in the combustion chamber 21a and increasing the proportion of exhausted nitrogen oxides in the exhaust gas.

Alternatively, the engine device 1 controls the waste gate valve 55a by the control device 9 to increase the degree of opening of the waste gate 55. This controls the proportion of exhausted nitrogen oxides to achieve a predetermined desired proportion by increasing the amount of residual gas, decreasing the amount of air compressed in the turbocharger 51, decreasing the proportion of air in intake air, increasing the proportion of the fuel, elevating the combustion temperature in the combustion chamber 21a and increasing the proportion of exhausted nitrogen oxides in the exhaust gas.

Alternatively, the engine device 1 controls the variable nozzle 51c by the control device 9 to increase the degree of opening of the variable nozzle 51c and increase the passage area of the turbine 51a in the turbocharger 51. This controls the proportion of exhausted nitrogen oxides to achieve a predetermined desired proportion by increasing the amount of residual gas, decreasing the amount of air compressed in the turbocharger 51, decreasing the proportion of air in intake air, increasing the proportion of the fuel, elevating the combustion temperature in the combustion chamber 21a and increasing the proportion of exhausted nitrogen oxides in the exhaust gas.

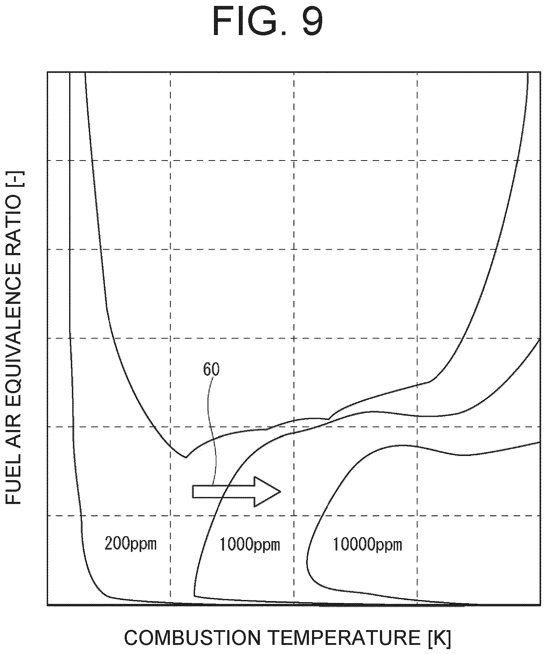

In FIG. 9, the combustion temperature in the combustion chamber 21a is indicated in the axis of abscissa, and the fuel air equivalence ratio of the fuel to air of the air-fuel mixture which is supplied to the combustion chamber 21a is indicated by the axis of ordinate. In FIG. 9, with respect to the relationship between the combustion temperature and the fuel air equivalence ratio, a map of NO + NO₂ contained in the exhaust gas of the engine device 1 is shown, and NO + NO₂ increases toward the direction indicated with an outline arrow 60. According to FIG. 9, the higher combustion temperature, the more NO + NO₂ is contained.

Thus, according to another example, by performing at least one of decreasing the EGR ratio, increasing the injection pressure of the auxiliary fuel, increasing the amount of bypassed intake air, increasing the degree of opening of the waste gate in the turbocharger 51, and increasing the degree of opening of the variable nozzle in the turbocharger 51, the proportion of exhausted nitrogen oxides in the exhaust gas can be increased to control the proportion of exhausted nitrogen oxides to achieve a predetermined proportion.

On the other hand, in an even another example, in addition to the air excess ratio of the air-fuel mixture, the injection timing of the auxiliary fuel and the proportion of the mixed main fuel described above, or instead of the air excess ratio of the air-fuel mixture, the injection timing of the auxiliary fuel and the proportion of the mixed main fuel described above, the engine device 1 is configured to control the proportion of exhausted unburned ammonia to achieve a predetermined desired proportion (predetermined proportion) by performing at least one of increasing the EGR ratio of the recirculation device 53, increasing the injection pressure of the auxiliary fuel by the auxiliary fuel injection part 26, decreasing the amount of air bypassed in the intake bypass passage 54 from the intake passage 3 to the exhaust passage 4 (i.e., the amount of bypassed intake air), decreasing the degree of opening of the waste gate 55 in the turbocharger 51, and decreasing the degree of opening of variable nozzle 51c in the turbocharger 51 to increase the proportion of exhausted unburned ammonia in the proportion of exhausted unburned ammonia and nitrogen oxides in the exhaust gas.

In particular, the engine device 1 controls the recirculation valve 53c of the recirculation device 53 by the control device 9 to increase the EGR ratio which is the proportion of the exhaust gas recirculated from the exhaust passage 4 to the intake passage 3 by the recirculation device 53. This controls the proportion of exhausted unburned ammonia to achieve a predetermined desired proportion (predetermined proportion) by increasing the exhaust gas recirculated to intake air, lowering the combustion temperature in the combustion chamber 21a, and increasing the proportion of exhausted unburned ammonia in the exhaust gas.

Alternatively, the engine device 1 controls the auxiliary fuel injection part 26 by the control device 9 to reduce the injection pressure of the auxiliary fuel injected to the combustion chamber 21a. This controls the proportion of exhausted unburned ammonia to achieve a predetermined desired proportion by lowering the combustion temperature in the combustion chamber 21a with combustion of the auxiliary fuel having the reduced injection pressure, and increasing the proportion of exhausted unburned ammonia in the exhaust gas.

Alternatively, the engine device 1 controls the intake bypass valve 54a by the control device 9 to reduce the amount of bypassed intake air to the exhaust passage 4. This controls the proportion of exhausted unburned ammonia to achieve a predetermined desired proportion by increasing the proportion of air in intake air, decreasing the proportion of the fuel, lowering the combustion temperature in the combustion chamber 21a and increasing the proportion of exhausted unburned ammonia in the exhaust gas.

Alternatively, the engine device 1 controls the waste gate valve 55a by the control device 9 to reduce the degree of opening of the waste gate 55. This controls the proportion of exhausted unburned ammonia to achieve a predetermined desired proportion by reducing the amount of residual gas, increasing the amount of compressed air in the turbocharger 51, increasing the proportion of air in intake air, decreasing the proportion of the fuel, lowering the combustion temperature in the combustion chamber 21a and increasing the proportion of exhausted unburned ammonia in the exhaust gas.

Alternatively, the engine device 1 controls, by the control device 9, the variable nozzle 51c to decrease the degree of opening of the variable nozzle 51c to reduce the passage area of the turbine 51a in the turbocharger 51. This controls the proportion of exhausted unburned ammonia to achieve a predetermined desired proportion by reducing the amount of residual gas, increasing the amount of compressed air in the turbocharger 51, increasing the proportion of air in intake air, decreasing the proportion of the fuel, lowering the combustion temperature in the combustion chamber 21a and increasing the proportion of exhausted unburned ammonia in the exhaust gas.

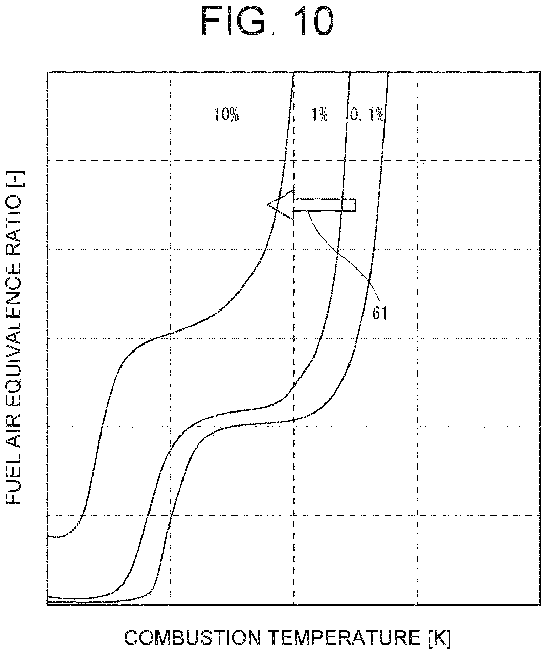

In FIG. 10, the combustion temperature in the combustion chamber 21a is indicated in the axis of abscissa, and the fuel air equivalence ratio of the fuel to air in the air-fuel mixture supplied to the combustion chamber 21a is indicated in the axis of ordinate. In FIG. 10, with respect to the relationship between the combustion temperature and the fuel air equivalence ratio, a map of unburned ammonia contained in the exhaust gas in the engine device 1 is shown, and unburned ammonia increases toward the direction indicated with an outline arrow 61. According to FIG. 10, the lower the combustion temperature, the more unburned ammonia is contained.

Thus, according to another example, by performing at least one of increasing the EGR ratio, decreasing the injection pressure of the auxiliary fuel, decreasing the amount of bypassed intake air, decreasing the degree of opening of the waste gate in the turbocharger 51 and decreasing the degree of opening of the variable nozzle in the turbocharger 51, the proportion of exhausted unburned ammonia in the exhaust gas can be increased to control the proportion of exhausted unburned ammonia to achieve a predetermined proportion.

Meanwhile, the present invention can be appropriately modified in a range that does not contradict the gist or concept of the invention that can be read throughout claims and the specification, and an engine device to which such modifications have been made is also included in the technical concept of the present invention.

### [Supplementary notes of the invention]

An outline of the invention extracted from the above-described embodiment will be described below as supplementary notes. Meanwhile, the structures and processing functions described in the following supplementary notes can be selected and arbitrarily combined.

### <Supplementary note 1>

An ammonia mixed combustion engine device operated by a main fuel containing ammonia and a hydrocarbon-based auxiliary fuel being combusted,
wherein at least one of an air excess ratio of an air-fuel mixture of the main fuel and air and an injection timing of the auxiliary fuel is controlled so that a proportion of exhausted unburned ammonia and nitrogen oxides contained in an exhaust gas achieves a predetermined proportion.

### <Supplementary note 2>

An ammonia mixed combustion engine device operated by a main fuel containing ammonia and a hydrocarbon-based auxiliary fuel being combusted,
wherein hydrogen is mixed with the ammonia to create the main fuel, and
a proportion of the mixed ammonia and hydrogen in the main fuel is controlled so that a proportion of exhausted unburned ammonia and nitrogen oxides contained in an exhaust gas achieves a predetermined proportion.

### <Supplementary note 3>

An ammonia mixed combustion engine device operated by a main fuel containing ammonia and a hydrocarbon-based auxiliary fuel being combusted,
wherein hydrogen is mixed with the ammonia to create the main fuel, and
at least one of an air excess ratio of an air-fuel mixture of the main fuel and air, an injection timing of the auxiliary fuel, and a proportion of the mixed ammonia and hydrogen in the main fuel is controlled so that a proportion of exhausted unburned ammonia and nitrogen oxides contained in an exhaust gas achieves a predetermined proportion.

### <Supplementary note 4>

The engine device according to supplementary note 3, wherein a proportion of the exhausted unburned ammonia is controlled to achieve the predetermined proportion by performing at least one of increasing or decreasing the air excess ratio, retarding the injection timing and increasing the proportion of mixed ammonia to increase a proportion of the exhausted unburned ammonia in a proportion of the exhausted unburned ammonia and nitrogen oxides in the exhaust gas.

### <Supplementary note 5>

The engine device according to supplementary note 3 or 4, wherein a proportion of the exhausted nitrogen oxides is controlled to achieve the predetermined proportion by performing at least one of increasing or decreasing the air excess ratio, advancing the injection timing and increasing the proportion of the mixed hydrogen to increase a proportion of the exhausted nitrogen oxides in a proportion of the exhausted unburned ammonia and nitrogen oxides in the exhaust gas.

### <Supplementary note 6>

The engine device according to any one of supplementary notes 1-5, characterized by comprising:
a selective reduction catalyst for reducing the nitrogen oxides contained in the exhaust gas by a reducing agent; and
an ammonia adsorption catalyst for absorbing the unburned ammonia contained in the exhaust gas.

### <Supplementary note 7>

The engine device according to any one of supplementary notes 2-5, wherein the ammonia is reformed to create the hydrogen.

### <Supplementary note 8>

The engine device according to supplementary note 3, wherein a proportion of the exhausted nitrogen oxides is controlled to achieve the predetermined proportion by performing at least one of decreasing an EGR ratio, increasing an injection pressure of the auxiliary fuel, increasing an amount of bypassed intake air, increasing a degree of opening of a turbocharger waste gate, and increasing a degree of opening of a turbocharger variable nozzle to increase a proportion of the exhausted nitrogen oxides in a proportion of the exhausted unburned ammonia and nitrogen oxides in the exhaust gas.

### <Supplementary note 9>

The engine device according to supplementary note 3, wherein a proportion of the exhausted unburned ammonia is controlled to achieve the predetermined proportion by performing at least one of increasing an EGR ratio, decreasing an injection pressure of the auxiliary fuel, decreasing an amount of bypassed intake air, decreasing a degree of opening of a turbocharger waste gate, and decreasing a degree of opening of a turbocharger variable nozzle to increase a proportion of the exhausted unburned ammonia in a proportion of the exhausted unburned ammonia and nitrogen oxides in the exhaust gas.

### REFERENCE SIGNS LIST

1 engine device
2 ammonia mixed combustion engine
3 intake passage
4 exhaust passage
5 main fuel supply device
6 auxiliary fuel supply device
7 selective reduction catalyst
7a reducing agent supply part
8 ammonia adsorption catalyst
9 control device
11 ammonia tank
12 ammonia supply part
13 ammonia decomposition device
14 hydrogen tank
15 hydrogen supply part
16 auxiliary fuel tank
17 auxiliary fuel supply part
21 cylinder
21a combustion chamber
26 auxiliary fuel injection part
35 ammonia injection part
36 hydrogen injection part
50 intake throttle
51 turbocharger
51a turbine
51b compressor
51c variable nozzle
52 intercooler
53 recirculation device
53a recirculation passage
53b recirculation cooler
53c recirculation valve
54 intake bypass passage
54a intake bypass valve
55 waste gate
55a waste gate valve

## Claims

1. An ammonia mixed combustion engine device operated by a main fuel containing ammonia and a hydrocarbon-based auxiliary fuel being combusted,
wherein at least one of an air excess ratio of an air-fuel mixture of the main fuel and air and an injection timing of the auxiliary fuel is controlled so that a proportion of exhausted unburned ammonia and nitrogen oxides contained in an exhaust gas achieves a predetermined proportion.

2. An ammonia mixed combustion engine device operated by a main fuel containing ammonia and a hydrocarbon-based auxiliary fuel being combusted,
wherein hydrogen is mixed with the ammonia to create the main fuel, and
a proportion of the mixed ammonia and hydrogen in the main fuel is controlled so that a proportion of exhausted unburned ammonia and nitrogen oxides contained in an exhaust gas achieves a predetermined proportion.

3. An ammonia mixed combustion engine device operated by a main fuel containing ammonia and a hydrocarbon-based auxiliary fuel being combusted,
wherein hydrogen is mixed with the ammonia to create the main fuel, and
at least one of an air excess ratio of an air-fuel mixture of the main fuel and air, an injection timing of the auxiliary fuel, and a proportion of the mixed ammonia and hydrogen in the main fuel is controlled so that a proportion of exhausted unburned ammonia and nitrogen oxides contained in an exhaust gas achieves a predetermined proportion.

4. The engine device according to claim 3, wherein a proportion of the exhausted unburned ammonia is controlled to achieve the predetermined proportion by performing at least one of increasing or decreasing the air excess ratio, retarding the injection timing and increasing the proportion of mixed ammonia to increase a proportion of the exhausted unburned ammonia in a proportion of the exhausted unburned ammonia and nitrogen oxides in the exhaust gas.

5. The engine device according to claim 3, wherein a proportion of the exhausted nitrogen oxides is controlled to achieve the predetermined proportion by performing at least one of increasing or decreasing the air excess ratio, advancing the injection timing and increasing the proportion of the mixed hydrogen to increase a proportion of the exhausted nitrogen oxides in a proportion of the exhausted unburned ammonia and nitrogen oxides in the exhaust gas.

6. The engine device according to any one of claims 1-3, comprising:
a selective reduction catalyst for reducing the nitrogen oxides contained in the exhaust gas by a reducing agent; and
an ammonia adsorption catalyst for absorbing the unburned ammonia contained in the exhaust gas.

7. The engine device according to claim 2 or 3, wherein the ammonia is reformed to create the hydrogen.

8. The engine device according to claim 3, wherein a proportion of the exhausted nitrogen oxides is controlled to achieve the predetermined proportion by performing at least one of decreasing an EGR ratio, increasing an injection pressure of the auxiliary fuel, increasing an amount of bypassed intake air, increasing a degree of opening of a turbocharger waste gate, and increasing a degree of opening of a turbocharger variable nozzle to increase a proportion of the exhausted nitrogen oxides in a proportion of the exhausted unburned ammonia and nitrogen oxides in the exhaust gas.

9. The engine device according to claim 3, wherein a proportion of the exhausted unburned ammonia is controlled to achieve the predetermined proportion by performing at least one of increasing an EGR ratio, decreasing an injection pressure of the auxiliary fuel, decreasing an amount of bypassed intake air, decreasing a degree of opening of a turbocharger waste gate, and decreasing a degree of opening of a turbocharger variable nozzle to increase a proportion of the exhausted unburned ammonia in a proportion of the exhausted unburned ammonia and nitrogen oxides in the exhaust gas.
